# EUROPÄISCHE PATENTANMELDUNG

(11) **EP 1 029 629 A2**
(43) Veröffentlichungstag der Anmeldung: **23.08.2000**
(21) Anmeldenummer: 00102265.6
(22) Anmeldetag: 15.02.2000
(51) Int. Cl.: B23K 35/02, C23C 24/10

(54) **Verfahren zum Herstellen einer Schutzschicht auf der Oberfläche eines Bauteils od.dgl. Werkstückes sowie Legierung und Lotwerkstoff dafür**

(30) Priorität: 17.02.1999 DE 19906765; 13.01.2000 DE 10000988
(71) Anmelder: Euromat GmbH, 41836 Hückelhoven (DE)
(72) Erfinder: Balzereit, Jürgen Dipl.-Ing., 52074 Aachen (DE); Deisser, Todd Alexander Dipl.-Ing., 52066 Aachen (DE); Rass, Ino Jakob, Dr.-Ing., 52062 Aachen (DE); Lugscheider, Erich, Prof. Dr., 52074 Aachen (DE)
(74) Vertreter: Hiebsch, Gerhard F., Dipl.-Ing.

(57) **Zusammenfassung**

Bei einem Verfahren zum Herstellen einer Schutzschicht auf der Oberfläche eines Bauteils od. dgl. Werkstückes mittels eines -- einen Anteil an Metallpulver enthaltenden --pastenförmigen, auf den Grundwerkstoff des Bauteils bandartig aufgebrachten und eingeschmolzenen Werkstoffes, werden zum einen dem metallischen Pulver aus einem Kornbereich oder einem Pulvergemisch aus mehreren Kornbereichen einer Kornverteilung von etwa 3 bis 200 µm etwa 3 bis 12 Gew.-% eines Binders sowie etwa 1 bis 10 Gew.-% eines Presshilfsmittels zugemischt; diese Mischung wird einer Presseinrichtung zugeführt und darin mit einem Pressdruck zwischen 10 und 150 bar zu einem Band geformt, wonach das Band auf die Oberfläche des metallischen Bauteils aufgebracht und mit dieser durch eine Wärmebehandlung verbunden wird. Zum anderen soll eine aus pulverförmigen Lotwerkstoffen hergestellte pastenförmige oder bandartige Masse zu einem den Dimensionen eines in der Oberfläche des Bauteils vorhandenen Verschleißbereichs od. dgl. Oberflächenfehler angepassten Körper geformt, in diesen Verschleißbereich od. dgl. eingesetzt und einer Nachbehandlung unterzogen werden; letztere ist insbesondere eine Wärmebehandlung. Der erwähnte Verschleißbereich bzw. der Bereich des Oberflächenfehlers wird der Nachbehandlung zusammen mit der Oberfläche des beschichteten Werkstücks unterzogen.

## Beschreibung

Die Erfindung betrifft ein Verfahren zum Herstellen einer Schutzschicht auf der Oberfläche eines Bauteils od. dergl. Werkstückes mittels eines einen Anteil an Metallpulver enthaltenden pastenförmigen Werkstoffes, der auf den Grundwerkstoff des Bauteils aufgebracht und eingeschmolzen wird. Zudem erfasst die Erfindung eine dafür besonders geeignete Legierung sowie einen Lotwerkstoff.

Der Schutz von Oberflächen mittels auf diese -- beispielsweise durch thermische Spritz-, Schweiß- oder Lötverfahren -- aufgebrachten Schichten ist seit langem bekannt und wird in weitem Umfang in der Industrie mit Erfolg angewendet. Die bekannten Beschichtungsverfahren wie Plasma- und Flammspritzen oder Auftragsschweißen sind mit erheblichem maschinellem Aufwand verbunden und verursachen mit den bei der Anwendung entstehenden Dämpfen sowie Stäuben eine hohe Umweltbelastung, d. h. die Verfahren dürfen nur unter Verwendung von Absauganlagen -- samt den dazugehörenden Filteranlagen -- eingesetzt werden. Dabei entstehen Filterstäube, deren Beseitigung als Sondermüll wiederum zu hohen Kosten führt.

Mit der WO 9221785 wurden angesichts dieser Umweltprobleme Pasten oder aus diesen bandartig vorgefertigte Werkstoffmassen aus selbstfließenden Legierungen mit Karbiden vorgeschlagen, die auf eine zu panzernde Oberfläche aufgelegt und eingeschmolzen werden. Die als Paste aus einem Ni-Cr-B-Si-Legierungspulver, einem Flussmittel sowie einem wasserlöslichen Methacrylat aufgestrichenen oder als vorgefertigtes Band aufgebrachten Schichten besitzen eine Porosität, mit der eine Verbesserung beispielsweise der Verschleißeigenschaften nicht möglich ist; die eingebrachten Karbide brechen durch die beim Aufschmelzen entstandene Porosität aus.

Der DE-A-41 02 469 ist ein Verfahren zum kontinuierlichen Herstellen dünnwandiger Formkörper aus Keramik zu entnehmen, der DE-C-41 33 712 ein Verfahren zum Erzeugen von zumindest zweischichtigen Verbundwerkstoffen aus pulverförmigen Werkstoffen.

Die in den vorstehend genannten Veröffentlichungen erörterten Verfahren werden auf dem Markt nicht angeboten. Da aber der Gedanke, eine bandartige Auflage zur Verbesserung der Oberflächeneigenschaften von Substraten bzw. zum Aufbringen einer Oberflächenschicht auf diese unverhältnismäßig umweltfreundlich ist, hat sich der Erfinder das Ziel gesetzt, diese Idee aufzugreifen und ihre Anwendung zu ermöglichen; insbesondere sollen gute Korrosions- und Verschleißschutzschichten hoher Qualität umweltschonend geschaffen werden können. Zudem soll das Ausbessern von Verschleißbereichen od. dgl. Oberflächenmängel vereinfacht werden.

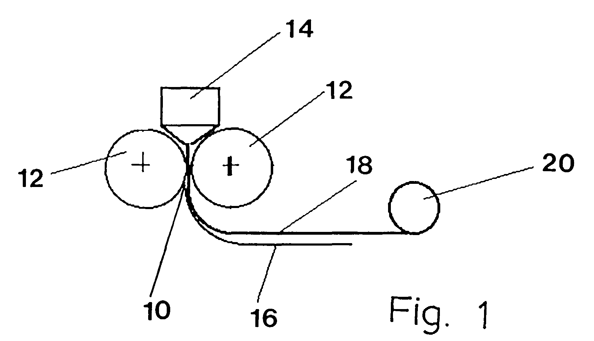

Zur Lösung dieser Aufgabe führen die Lehren der unabhängigen Patentansprüche; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß werden dem metallischen Pulver aus einem Kornbereich -- oder einem Pulvergemisch aus mehreren Kornbereichen -- einer Kornverteilung von etwa 3 bis 200 µm etwa 3 bis 12 Gew.-% eines Binders sowie etwa 1 bis 10 Gew.-% eines Presshilfsmittels zugemischt, dann wird diese Mischung einer Presseinrichtung zugeführt und darin mit einem Pressdruck zwischen 10 und 150 bar -- bevorzugt zwischen 20 und 100 bar -- zu einem Band geformt, wonach das Band auf die Oberfläche des metallischen Bauteils aufgebracht und mit dieser durch eine Wärmebehandlung verbunden wird. Als Presseinrichtung dient ein Walzenpaar, dessen Pressspalt die Mischung zugeführt wird.

Der Werkstoff wird also in einer Formvorrichtung -- insbesondere jenem Walzenpaar -- zum Band; der dann aufgewendete Pressdruck hängt stark von der Kornverteilung der zu verpressenden Masse aus einem metallischen Pulver, einem Binder und/oder einem Plastifizierer ab. Binder und Plastifizierer werden in flüssiger Form oder als Pulver zugesetzt.

Eine besonders günstige Legierung für die zu verpressende Masse weist eine Zusammensetzung von 12 bis 20 Gew.-% Cr, 11 bis 14 Gew.-% Ni, 0 bis 5 Gew.-% Mo, Rest Fe, auf.

Die Presstemperaturen sollen erfindungsgemäß in der Regel bei Raumtemperatur liegen, im Falle der Verwendung eines thermisch beeinflussbaren Bindemittels kann die Formgebung des bandförmigen Werkstoffes bei Temperaturen bis zu 150° C vorgenommen werden.

Der zu wählende Kornbereich für die metallischen Pulver zum Herstellen der Masse sollten bei 3 bis 20 µm, 30 bis 75 µm oder 75 bis 200 µm liegen. Die Kornverteilung des metallischen Pulvergemisches beträgt vorteilhafterweise vor dem Zusatz des Binders bzw. Plastifizierers zwischen 3 und 200 µm, insbesondere 10 und 150 µm. Werden metallische Verbindungen oder Hartstoffe eingesetzt, sollten diese eine maximale Korngröße von 150 µm, vorzugsweise 120 µm, aufweisen.

Als Binder eignen sich Latex, Polyvinylacetat, Polyvinylalkohol, PVC, PE, PU, PP od. dergl. Stoffe und als Plastifizierer Glyzerin, Silikonöl od. dergl. Die Bereiche für den Binder sollten 3 bis 10 Gew. % -- vorzugsweise 3 bis 8 Gew. % -- erfassen, die Bereiche für den Plastifizierer 1 bis 8 Gew. %, insbesondere 2 bis 5 Gew. %. Besonders günstig ist im übrigen der Einsatz des beschriebenen Bandes bei Lötvorgängen.

Um nun das Ausbessern von Verschleißbereichen od. dgl. Oberflächenmängel zu ermöglichen, wird im Rahmen der Erfindung eine aus pulverförmigen Lotwerkstoffen hergestellte pastenförmige oder bandartige Masse zu einem den Dimensionen eines in der Oberfläche des Bauteils vorhandenen Verschleißbereiches od. dgl. Oberflächenfehlers angepassten Körper geformt, in diesen Verschleißbereich od.dgl. eingesetzt und dann einer Nachbehandlung -- insbesondere einer Wärmebehandlung -- unterzogen. Dazu hat es sich als günstig erwiesen, den Verschleißbereich oder den Bereich des Oberflächenfehlers der Nachbehandlung zusammen mit der Oberfläche des beschichteten Werkstückes zu unterziehen.

Bei Durchführung des Verfahrens wird die Form der zu beschichtenden Oberfläche bzw. des Bereiches des Oberflächenfehlers mittels einer aushärtenden pastenförmigen Masse abgenommen, wobei zum Abnehmen der Form des Oberkörperfehlers bevorzugt eine Silikonkautschuk-Formmasse aufgetragen und nach dem Verfestigen abgezogen wird.

Nach einem weiteren Merkmal der Erfindung werden ein Abdruck des Bereiches des Oberflächenfehlers und aus diesem Abdruck eine Negativform erzeugt; letztere wird mit der plastischen Masse gefüllt und das so hergestellte Formteil in den Bereich des Oberflächenfehlers eingesetzt, wonach die Wärmebehandlung erfolgt.

Zur Wärmebehandlung kann erfindungsgemäß eine Induktionsspule oder ein Laserstrahl eingesetzt werden, zudem auch ein Ofen, insbesondere ein Elektroofen, in dem die Behandlung unter Luft, Schutzgas oder Vakuum durchgeführt wird.

Erfindungsgemäß wird das Band oder der ausgeschnittene Formkörper mit der ihm zugeordneten Oberfläche verschweißt bzw. durch Umschmelzen mit dem Lichtbogen oder einem Laserstrahl mit der Oberfläche des Werkstückes verbunden. Auch kann das Band bzw. der Formkörper durch eine Ofennachbehandlung an die Oberfläche des Werkstückes gebunden werden.

Als Lotwerkstoff sind insbesondere für jenen Formkörper von besonderem Interesse Kupfer- und Nickellegierungen mit Legierungszusätzen, die eine den Schmelzpunkt senkende Wirkung anbieten und es ermöglichen, aus einer Masse zum Walzen bzw. zum Vorformen eines Körpers mit einer verschlissenen Stelle einen Teil einzusetzen, der nachträglich eingeschmolzen wird, ohne dass die der Masse vor der Bandherstellung zugegebenen Hartstoffe oder Diamanten zersetzt oder umgewandelt werden.

So hat sich ein Lotwerkstoff zum Beschichten, insbesondere aber zum Herstellen von in eine Beschichtung einsetzbaren Formkörpern als günstig erwiesen, der Kupfer oder eine Kupferlegierung mit Zusätzen von Phosphor, Zink, Silber, Germanium, Palladium und gegebenenfalls anderen Elementen enthält.

Nach einem weiteren Merkmal der Erfindung enthält der Lotwerkstoff ein Lotpulver mit 1 bis 10 Gew.-% Phosphor --vorzugsweise 4 bis 8 Gew.-% Phosphor -- sowie einen Rest aus Kupfer, wobei dem Kupfer Silber zugesetzt sein kann.

Desweiteren kann ein Lotwerkstoff eingesetzt werden aus einem Kupfer-Zinklotpulver mit 30 bis 45 Gew.-% Zink, vorzugsweise 36 bis 42 Gew.-% Zink, wobei dem Zink Silber bzw. Silizium zugesetzt sein kann; insbesondere sind Zusätze von etwa 42 Gew.-% Zn und 0,3 Gew.-% Ag sowie etwa 20 Gew.-% Diamantpulver von Vorteil.

Im Rahmen der Erfindung liegt auch ein Lotwerkstoff mit einem Kupfer-Silberlotpulver, das 70 bis 80 Gew.-% Silber - - Rest Kupfer -- enthält, oder ein Kupfer-Gold-Silberpulver mit Au 30 bis 40 Gew.-% und Ag 30 bis 40 Gew.-%, Rest Kupfer.

Der Lotwerkstoff kann auch ein Kupfer-Germaniumlotpulver mit 0,1 bis 10 Gew.-% Germanium sein, wobei Korngrößen von Kupfer und Germanium < 100 µm sowie des Wolframkarbids von > 600 µm bevorzugt werden. Im Falle eines Lotwerkstoffes aus einem Kupfer-Palladiumpulver werden 15 bis 25 Gew.-% Palladium, Rest Kupfer, bevorzugt.

Die Erfindung erfasst auch einen Lotwerkstoff, der ein Nickellotpulver mit bis 30 Gew.-% Chrom; 0,9 bis 4 Gew.-% Bor; 0,6 bis 4,25 Gew.-% Silizium; 0,2 bis 5,0 Gew.-% Eisen; 0,05 bis 1 Gew.-% Kohlenstoff; Rest Nickel enthält, insbesondere ein Nickellotpulver mit Cr 2,5 bis 3,5 Gew.-%; B 3,0 bis 4,0 Gew.-%; Si 3,7 bis 4,8 Gew.-%; Fe 2,5 bis 3,5 Gew.-% und Rest Ni.

Dem Lotwerkstoff werden vorteilhafterweise Hartstoffpulver -- wie Karbide, Boride, Nitride, Silicide, Oxide und/oder Diamant -- im Bereich von etwa 20 bis 60 Vol.-% zugesetzt, wobei etwa 50 Gew.-% feine Karbide (WC) einer Korngröße unter 30 µm bevorzugt wurden.

Im Rahmen der Erfindung liegen schließlich Verwendungen des beschriebenen Verfahrens und des Lotwerkstoffes zum Beschichten gegen Verschleißangriffe bzw. zum Ausbessern von Fehlbereichen bei:
- Innenflächen von Rohrleitungen;
- Turbinenschaufeln, insbesondere Gas- und Flugzeugturbinenschaufeln;
- Motorenteilen;
- Mischerteilen;
- Bauteilen an Agrarmaschinen wie Mähmesser, Pflugscharen;
- Teilen für die Glasformgebung;
- Werkzeugen für die Beton- und Gesteinsbearbeitung, die Holzbearbeitung, das Extrudieren von Werkstoffen.

Weitere Vorteile, Merkmale und Einzelheiten der Erfindung ergeben sich aus der nachfolgenden Beschreibung eines bevorzugten Ausführungsbeispiels sowie anhand der Zeichnung; deren einzige Figur zeigt eine Skizze einer Presseinrichtung.

Zum Herstellen eines bandförmigen Werkstoffes dient eine Anlage mit zwei einen Walzenspalt 10 begrenzenden Presswalzen 12. Über dem Walzenspalt 10 ist eine Zuführeinrichtung 14 für eine zu pressende Masse angeordnet sowie unter ihm ein von ihm ausgehendes und zur rechten Bildseite hin gekrümmtes Leitblech 16 für ein aus dem Walzenspalt 10 austretendes gepresstes Band 18. Dieses wird der Oberfläche eines Werkstückes 20 zugeführt und mit dieser durch Umschmelzen mit dem Lichtbogen verbunden.

Nachfolgend sind einige Ausführungsbeispiele zu dem Verfahren wiedergegeben.

### Beispiel 1

Der Rohrkrümmer einer Anlage für die chemische Industrie sollte zum Schutze gegen Erosion an den einem Verschleiß ausgesetzten Stellen mit einer Schutzschicht versehen werden. Durch die Form des Krümmers bedingt, war es nicht möglich, diesen durch ein Spritz- oder Schweißverfahren zu beschichten. Aus diesem Grunde wurde an der zu beschichtenden Stelle ein Legierungsband aus Metallpulver und einem Binder der folgenden Zusammensetzungen vorgesehen:
(a) Metallpulver:

| | |
|---|---|
| Cr | 15,5 Gew.-%; |
| Ni | 13,0 Gew.-%; |
| Mo | 1,4 Gew.-%; |
| Fe | Rest; |

(b) Binder (7 Gew.-% der genannten Mischung):

| | |
|---|---|
| PVC | 3 Gew.-%; |
| Latex | 2 Gew.-%; |
| Silicon | 2 Gew.-%. |

Das Verbinden und Umschmelzen des Bandes auf dem Rohrkrümmer erfolgte mit einem gepulsten Laserstrahl von 7,2 KW.
Der so hergestellte Rohrkrümmer wurde anschließend eingebaut und getestet. Die Standzeit erhöhte sich gegenüber einem nicht beschichteten Krümmer um das Doppelte.

### Beispiel 2

Ein Maschinenteil, welches durch Feinstaub einem hohen Verschleiß ausgesetzt ist, sollte durch eine Schicht geschützt werden. Die verwendete Legierung entsprach der in Beispiel 1 mit dem Unterschied, dass ein Hartstoffanteil von
45 Gew.-% Karbid (W, Cr, Ti)
zugesetzt wurde; als Binder wurde die Mischung aus Beispiel 1 verwendet.

Beim Einsatz des Maschinenteils wurde ebenfalls eine hohe Verbesserung der Standzeit attestiert.

### Beispiel 3

Ein Zahn einer Erdbewegungsmaschine sollte mit einer Verschleißschicht versehen werden. Auch hier musste wegen Form und Zugänglichkeit des Zahnes auf die bekannten Beschichtungsverfahren verzichtet werden.

Als bandförmiger Werkstoff wurde eine Legierung auf Nickel/Chrom-Basis mit der Zusammensetzung verwendet:

| | |
|---|---|
| Cr | 25,6 Gew.-%; |
| Fe | 10,9 Gew.-%; |
| Mo | 2,0 Gew.-%; |
| Ni | Rest. |

Der Binder war eine Latexlösung mit einem Gehalt an 5 Gew.-% Latex.

Nach dem Aufkleben wurde das Band durch Aufschmelzen mit dem Lichtbogen mit dem Grundwerkstoff verbunden.

### Beispiel 4

Die Standzeit eines sog. Messerdisks für eine Diskmähmaschine sollte durch das Aufbringen einer feine Karbide (WC) enthaltenden Schneidkante erhöht werden. Versuche, dies durch ein thermisches Spritzverfahren zu erreichen, schlugen fehl, da die feinen Karbide beim nachträglichen Einschmelzen in eine brüchigere Phase (W₂C) umgewandelt wurden. Hierdurch war mit der Schicht eine längere Standzeit nicht zu erzielen.

Eine wesentliche Verbesserung der Standzeit für den Messerdisk konnte durch den Einsatz einer Nickellegierung mit

| | |
|---|---|
| Cr | 3,0 Gew.-%; |
| B | 3,5 Gew.-%; |
| Si | 4,2 Gew.-%; |
| Fe | 3,0 Gew.-%; |
| Rest | Ni |

erreicht werden. Dieser Nickellegierung wurde zur Verbesserung der Verschleißfestigkeit 50,0 Gew.-% feine Karbide (WC) einer Korngröße von < 30 µm hinzugemischt und daraus ein Band mit einer Dicke von 2 mm hergestellt. Nach dem Auflegen des Lotbandes auf den Messerdisk wurde dieser in einen Schutzgasofen eingelegt und die Beschichtung bei der eutektischen Temperatur von 990°C eingeschmolzen.

### Beispiel 5

An einer Gasturbinenschaufel sollte eine durch Verschleiß beschädigte Stelle ausgebessert werden, ohne die gesamte Schaufel neu zu beschichten. Dazu wurde eine Lotlegierung wie in Beispiel 1 -- allerdings mit einem höheren Chromgehalt von 9,8 Gew.-% -- in einer Form, die der verschlissenen Stelle an der Turbinenschaufel entsprach, aus dem bandförmigen Lotwerkstoff ausgeschnitten und in die beschädigte Stelle an der Gasturbinenschaufel eingesetzt. Anschließend wurde letztere einer Wärmebehandlung unterzogen. Der Lotwerkstoff wurde so gewählt, dass der Werkstoff der vorher aufgebrachten Beschichtung nicht geschmolzen bzw. beeinflusst werden konnte.

Es hat sich gezeigt, dass diese Behandlung wesentlich kostengünstiger ist als eine gesamte Neubeschichtung; diese bedingt ein vollständiges Abtragen der alten Schicht.

Auch nach einem Jahr Laufzeit konnte beim Testlauf und nach der Kontrolle kein Verschleißangriff festgestellt werden.

### Beispiel 6

An einer als Vor- und Fertigform für die Herstellung von Behältern eingesetzte Hohlglasform sollte die Glaskontaktfläche beschichtet werden. Da aus Beschichtungsversuchen an solchen Formen mit thermischem Spritzen bekannt ist, dass dieses Verfahren infolge auftretender Spannungen zwischen den Werkstoffen nicht eingesetzt zu werden vermag, wurde die Kontaktfläche mit streifenförmigen Ausfräsungen versehen, die mit einem Lotband der Zusammensetzung nach Beispiel 2 ausgelegt wurden.

Nach dem Einsintern der eingelegten Streifen wurde die Kontaktfläche poliert und die Form in die Glasmaschine eingebaut. Am Ende einer Laufzeit, die zweimal länger war als die für die nicht ausgelegten Formen, wurde die Form ausgebaut und begutachtet. An der Kontaktoberfläche konnten keine Abnutzungserscheinungen festgestellt werden.

### Beispiel 7

Aus einer runden Platte mit einem Durchmesser von 300 mm und einer Dicke von 2 mm sollte eine Kreissäge zum Schneiden von Marmor hergestellt werden. Auf den Rand der Stahlscheibe wurde beidseitig ein 30 mm breites und 1 mm rundes Formteil aufgelegt, das aus einem Kupferlotlegierungspulver -- mit 42 Gew.-% Zn und 0,3 Gew.-% Si -- mit 20 Gew.-% Diamantpulver gemischt war; die Korngröße der Pulver lag bei < 75 µm. Nach dem Auflegen der Bänder wurde die Scheibe an einer zentrischen Bohrung eingespannt und in einem Schutzgasofen unter Wasserstoff eingesintert.

### Beispiel 8

Für die Holzbearbeitung sollte eine kleine Fräse für eine besondere Arbeit hergestellt werden. Als Ausgangsmaterial diente ein Bolzen mit einem Durchmesser von 20 mm. Aus einem Kupferlotlegierungspulver -- Kupfer und Germanium mit einer Korngröße von < 100 µm und Wolframkarbidpulver mit einer Korngröße von > 600 µm -- wurde ein 3 mm dickes Band hergestellt, am unteren Ende der Achse aufgebracht und im Vakuumofen eingeschmolzen.

Nach dem Einschmelzen zeigte die Schicht eine definiert rauhe Oberfläche, welche durch die Karbide ausgebildet wurde.

Die Leistung des Fräsers entsprach den gegebenen Ansprüchen.

### Beispiel 9

In der chemischen Industrie sollte ein Dichtungsflansch einer Kupferrohrleitung verstärkt werden. Zu diesem Zweck wurde ein Band aus einem Kupfer-Gold-Silber-Lotpulver mit einer Dicke von 2 mm hergestellt, auf den Dichtungsflansch aufgelegt und im Schutzgasofen unter Argon eingeschmolzen. Nach dem Abkühlen wurde die Oberfläche des Flansches bearbeitet und in das Rohrleitungssystem eingebaut.

## Patentansprüche

1. Verfahren zum Herstellen einer Schutzschicht auf der Oberfläche eines Bauteils od. dergl. Werkstückes mittels eines einen Anteil an Metallpulver enthaltenden pastenförmigen Werkstoffes, der auf den Grundwerkstoff des Bauteils bandartig aufgebracht und eingeschmolzen wird,
dadurch gekennzeichnet,
dass dem metallischen Pulver aus einem Kornbereich oder einem Pulvergemisch aus mehreren Kornbereichen einer Kornverteilung von etwa 3 bis 200 µm etwa 3 bis 12 Gew. % eines Binders sowie etwa 1 bis 10 Gew. % eines Presshilfsmittels zugemischt werden, diese Mischung einer Presseinrichtung zugeführt und darin mit einem Pressdruck zwischen 10 und 150 bar zu einem Band geformt wird, wonach das Band auf die Oberfläche des metallischen Bauteils aufgebracht und mit dieser durch eine Wärmebehandlung verbunden wird.

2. Verfahren nach Anspruch 1, dadurch gekennzeichnet, dass die Mischung einem von einem Walzenpaar gebildeten Walzenspalt zugeführt wird.

3. Verfahren nach Anspruch 1, gekennzeichnet durch einen Pressdruck von 20 bis 100 bar.

4. Verfahren nach einem der Ansprüche 1 bis 3, dadurch gekennzeichnet, dass die Presstemperatur bei Einsatz eines thermisch beeinflussbaren Binders unterhalb 150° C liegt.

5. Verfahren nach einem der Ansprüche 1 bis 4, dadurch gekennzeichnet, dass als Pulver eine NiCr- oder eine Fe-Cr-Legierung als Basislegierung zugegeben wird.

6. Verfahren nach einem der Ansprüche 1 bis 5, dadurch gekennzeichnet, dass als Pulvergemisch eine Zusammensetzung aus 12 bis 20 Gew.-% Cr, 11 bis 14 Gew.-% Ni, bis 5 Gew.-% Mo, Rest Fe zugegeben wird.

7. Verfahren nach einem der Ansprüche 1 bis 6, dadurch gekennzeichnet, dass die Kornbereiche für die metallischen Pulver bei 3 bis 30 µm, 30 bis 75 µm und/oder 75 bis 200 µm liegen, und/oder dass die Kornverteilung des metallischen Pulvers bzw. Pulvergemisches zwischen 10 und 150 µm liegt bei einer maximalen Korngröße von vorzugsweise etwa 120 µm.

8. Verfahren nach einem der Ansprüche 1 bis 7, dadurch gekennzeichnet, dass der Anteil des Binders zwischen 3 und 8 Gew. % liegt, wobei der Binder gegebenenfalls eine Polyvenylacetat-, Polyvenylalkohol- oder PVC-Lösung ist, insbesondere eine Latexlösung.

9. Verfahren nach einem der Ansprüche 1 bis 8, dadurch gekennzeichnet, dass der Anteil des Presshilfsmittels zwischen 2 und 5 Gew. % liegt, und/oder dass das Presshilfsmittel Glycerin, Silikonöl, Fettsäureester, Zerylalkohol od. dgl. Plastifizierer ist.

10. Verfahren nach einem der Ansprüche 1 bis 9, dadurch gekennzeichnet, dass das Band mit der Oberfläche des Werkstückes verschweißt oder durch Umschmelzen mit Lichtbogen bzw. Laserstrahl mit der Oberfläche des Werkstückes verbunden wird, oder dass das Band durch eine Ofennachbehandlung mit der Oberfläche des Werkstückes verbunden wird.

11. Verfahren zum Herstellen einer Schutzschicht auf der Oberfläche eines Bauteils od. dgl. Werkstückes mittels eines einen Anteil an Metallpulver enthaltenden pastenartigen Werkstoffes, der auf den Grundwerkstoff des Bauteils flächig aufgebracht und eingeschmolzen wird, insbesondere Verfahren nach einem der voraufgehenden Patentansprüche, dadurch gekennzeichnet, dass eine aus pulverförmigen Lotwerkstoffen hergestellte pastenförmige oder bandartige Masse zu einem den Dimensionen eines in der Oberfläche des Bauteils vorhandenen Verschleißbereiches od.dgl. Oberflächenfehler angepassten Körper geformt, in diesen Verschleißbereich od.dgl. eingesetzt und einer Nachbehandlung unterzogen wird.

12. Verfahren nach Anspruch 11, dadurch gekennzeichnet, dass der Verschleißbereich oder der Bereich des Oberflächenfehlers der Nachbehandlung zusammen mit der Oberfläche des beschichteten Werkstückes unterzogen wird.

13. Verfahren nach Anspruch 11 oder 12, dadurch gekennzeichnet, dass die Form der zu beschichtenden Oberfläche bzw. des Bereiches des Oberflächenfehlers mittels einer aushärtenden pastenförmigen Masse abgenommen wird, wobei zum Abnehmen der Form des Oberkörperfehlers insbesondere eine Silikonkautschuk-Formmasse aufgetragen und nach dem Verfestigen abgezogen wird.

14. Verfahren nach einem der Ansprüche 11 bis 13, dadurch gekennzeichnet, dass ein Abdruck des Bereiches des Oberflächenfehlers und aus diesem Abdruck eine Negativform erzeugt werden, letztere mit der plastischen Masse gefüllt und das so hergestellte Formteil in den Bereich des Oberfächenfehlers eingesetzt wird.

15. Verfahren nach einem der Ansprüche 11 bis 14, dadurch gekennzeichnet, dass nach dem Auflegen oder Einsetzen des hergestellten Formteils das ausgebesserte oder beschichtete Teil einer Wärmebehandlung unterzogen wird, wobei letztere bevorzugt mit einer Induktionsspule oder mit einem Laserstrahl in einem Ofen, insbesondere in einem Elektroofen, unter Luft, Schutzgas oder Vakuum, durchgeführt wird.

16. Verfahren nach einem der Ansprüche 1 bis 15 zum Beschichten bzw. Ausbessern von Turbinenschaufeln und/oder Motorenteilen und/oder Werkzeugen und/oder von Teilen für die Glasformgebung.

17. Legierung zum Einsatz in dem Verfahren nach wenigstens einem der Ansprüche 1 bis 10, gekennzeichnet durch die folgende Zusammensetzung
| | |
|---|---|
| CR | 12 bis 20 Gew.-%; |
| Ni | 11 bis 14 Gew.-%; |
| Mo | bis 5 Gew.-%; |
| Rest | Fe. |

18. Lotwerkstoff zum Beschichten sowie zum Herstellen von in eine Beschichtung einsetzbaren Formkörpern für das Verfahren nach wenigstens einem der Ansprüche 1 bis 16, dadurch gekennzeichnet, dass er Kupfer oder eine Kupferlegierung mit Zusätzen von Phosphor, Zink, Silber, Germanium, Palladium und gegebenenfalls anderen Elementen enthält.

19. Lotwerkstoff nach Anspruch 18, gekennzeichnet durch ein Lotpulver mit 1 bis 10 Gew.-% Phosphor, vorzugsweise 4 bis 8 Gew.-% Phosphor, sowie einem Rest aus Kupfer, wobei letzterem gegebenenfalls Silber zugesetzt ist.

20. Lotwerkstoff nach Anspruch 18, gekennzeichnet durch ein Kupfer-Zinklotpulver mit 30 bis 45 Gew.-% Zink, vorzugsweise 36 bis 42 Gew.-% Zink, wobei gegebenenfalls dem Zink Silber und/oder Silizium zugesetzt sind und/oder Zusätze von etwa 42 Gew.-% Zn und 0,3 Gew.-% Ag sowie etwa 20 Gew.-% Diamantpulver.

21. Lotwerkstoff nach Anspruch 18, gekennzeichnet durch ein Kupfer-Silberlotpulver mit 70 bis 80 Gew.-% Silber, Rest Kupfer, oder ein Kupfer-Gold-Silberpulver mit Au 30 bis 40 Gew.-% und Ag 30 bis 40 Gew.-%, Rest Kupfer, oder ein Kupfer-Germaniumlotpulver mit 0,1 bis 10 Gew.-% Germanium, das gegebenenfalls eine Korngröße von Kupfer und Germanium < 100 µm sowie Wolframkarbid von > 600 µm aufweist.

22. Lotwerkstoff nach Anspruch 18, gekennzeichnet durch ein Kupfer-Palladiumpulver mit 15 bis 25 Gew.-% Palladium, Rest Kupfer.

23. Lotwerkstoff zum Beschichten sowie zum Herstellen von in eine Beschichtung einsetzbaren Formkörpern für das Verfahren nach einem der Ansprüche 1 bis 16, dadurch gekennzeichnet, dass er ein Nickellotpulver mit bis 30 Gew.-% Chrom; 0,9 bis 4 Gew.-% Bor; 0,6 bis 4,25 Gew.-% Silizium; 0,2 bis 5,0 Gew.-% Eisen; 0,05 bis 1 Gew.-% Kohlenstoff, Rest Nickel enthält, wobei er bevorzugt ein Nickellotpulver ist mit
| | |
|---|---|
| Cr | 2,5 bis 3,5 Gew.-%; |
| B | 3,0 bis 4,0 Gew.-%; |
| Si | 3,7 bis 4,8 Gew.-%; |
| Fe | 2,5 bis 3,5 Gew.-%; |
| Rest | Ni. |

24. Lotwerkstoff nach einem der Ansprüche 16 bis 21, dadurch gekennzeichnet, dass dem Lotwerkstoff Hartstoffpulver, wie Karbide, Boride, Nitride, Silicide, Oxide und/oder Diamant im Bereich von etwa 20 bis 60 Vol.-% zugesetzt sind, insbesondere etwa 50 Gew.-% feine Karbide (WC) einer Korngröße unter 30 µm.
